(19) Europäisches Patentamt
European Patent Office
Office européen des brevets

(11) Publication number: **0 210 833 B1**

# (12) EUROPEAN PATENT SPECIFICATION

(45) Date of publication of patent specification: **26.06.91**

(51) Int. Cl.[5]: **F02B 37/00**, F02B 37/14, F02B 39/10, F02B 23/02

(21) Application number: **86305649.5**

(22) Date of filing: **23.07.86**

## (54) Control system for a supercharged internal combustion engine.

(30) Priority: **26.07.85 JP 165340/85**
**26.07.85 JP 165341/85**

(43) Date of publication of application:
**04.02.87 Bulletin 87/06**

(45) Publication of the grant of the patent:
**26.06.91 Bulletin 91/26**

(84) Designated Contracting States:
**DE GB**

(56) References cited:
**EP-A- 0 079 100**
**EP-A- 0 159 146**

**PATENT ABSTRACTS OF JAPAN, vol. 9, no. 98 (M-375)[1821], 27th April 1985; & JP-A-59 221 426 (FUJI JUKOGYO K.K.) 13-12-1984**

**Idem**

**Idem**

**PATENT ABSTRACTS OF JAPAN, vol. 8, no. 87 (M-291)[1524], 20th April 1984; & JP-A-59 3116 (HINO JIDOSHA KOGYO K.K.) 09-01-1984**

**Idem**

**PATENT ABSTRACTS OF JAPAN, vol. 10, no. 66 (M-461)[2123], 15th March 1986; & JP-A-60 212 622 (ISHIKAWAJIMA HARIMA JUKOGYO K.K.) 24-10-1985**

**PATENT ABSTRACTS OF JAPAN, vol. 7, no. 106 (M-213)[1251], 10th May 1983; & JP-A-58 28 561 (TOYOTA JIDOSHA KOGYO K.K.) 19-02-1983**

(73) Proprietor: **Isuzu Motors Limited**
**6-22-10 Minamiooi Shinagawa-ku**
**Tokyo 140(JP)**

(72) Inventor: **Kawamura, Hideo**
**3129-13, Okada Samukawa-machi**
**Kouza-gun Kanagawa(JP)**

(74) Representative: **Brunner, Michael John et al**
**GILL JENNINGS & EVERY 53-64 Chancery Lane**
**London WC2A 1HN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

This invention relates to a control system for a supercharged internal combustion engine, and more particularly to a control system for controlling an internal combustion engine having a supercharger associated with a rotary electric machine.

Internal combustion engines on some recent motor vehicles are equipped with a supercharger comprising a turbine driven by the energy of exhaust gas emitted from the engine and a compressor coupled to the turbine for charging air into the engine cylinders to burn the fuel efficiently.

One widely used type of motor vehicle brake is known as an exhaust brake, which brakes the vehicle with increased engine braking by closing the exhaust pipe of a diesel engine, for example.

As shown in Fig. 4 of the accompanying drawings when a supercharged internal combustion engine is operated in medium and high speed ranges, the turbine of the supercharger rotates at a high speed to increase the pressure of the supercharged air since the exhaust energy emitted from the engine is large. Therefore, a torque curve Tb plotted in the medium and high engine speeds is higher than a torque curve Ta plotted when the engine is not supercharged. On the other hand, when the engine is being operated in a low speed range, no substantial boost pressure is generated, even if the supercharger is driven, since the exhaust energy is small. Consequently, the engine torque is generally low when the engine speed is low.

In order to increase the engine torque at low engine speeds, it has been proposed to reduce the opening of the nozzle which supplies the exhaust gas to the turbine, thereby increasing the pressure on the turbine. However, the device for varying the nozzle opening is costly, and it is difficult to achieve a desired level of durability of the turbine which is subject to the high-temperature exhaust gas.

The exhaust brake arrangement as referred to above requires a valve of a high sealing capability to be installed for closing the exhaust pipe, and it also has the disadvantages that there is a limitation on the range of materials available for manufacturing the valve, which is held in contact with the high-temperature exhaust gas, and that the shaft for opening and closing the valve must be lubricated.

Another problem of the exhaust brake system is that the exhaust energy is not effectively utilized since it only increases the engine braking action simply by closure of the exhaust pipe to raise the back pressure.

JP-A-59/221426 discloses a controller for a turbocharger wherein a rotary electric machine is coupled to the turbocharger.

EP-A-0079100 discloses a turbocharger having a rotary electric machine mounted on the shaft on which the exhaust turbine and compressor are mounted, the electric machine being selectively operable as either a motor or a generator.

It is an object of the present invention to provide an improved control system for a supercharged internal combustion engine.

According to the present invention, a control system, for controlling an internal combustion engine having a supercharger comprising an exhaust turbine connected to an exhaust manifold of the engine, a compressor, a rotatable shaft on which the exhaust turbine and the compressor are coaxially mounted, a rotary electric machine mounted on the rotatable shaft and operable selectively as an electric generator or an electric motor, and consuming means for consuming electric power generated by the rotary electric machine as a load on the electric generator, is characterised by means for detecting an engine brake mode, setting means for setting an engine brake mode of the internal combustion engine, the rotary electric machine being operated in use as an electric generator when the engine brake mode is set by the setting means.

Preferably, the control system comprises an inverter for driving the rotary electric machine as an electric motor, the setting means setting the magnitude of a force of an engine brake to be imposed on the internal combustion engine, and further comprising inverter driving means for driving the inverter to operate the rotary electric machine as the electric motor when the force of the engine brake is set to a value larger than a prescribed value by the setting means, for reversing rotation of the exhaust turbine of the supercharger, the operating means operating the rotary electric machine as the electric generator when the force of the engine brake is set to a value smaller than the prescribed value.

The motor generator may be operable as a generator under the control of signals representing the engine load, the speed of engine rotation, and the magnitude of a braking force, so that exhaust braking can effectively be actuated for braking the engine without requiring any valve in the exhaust system for that purpose. Stronger engine bråking may be achieved by reversing the rotation of the turbine blades, using the motor generator as a motor.

The rotary electric machine may be operated as a generator to provide effective utilisation of exhaust energy by converting it to electrical energy which is used to charge a battery, thus dispensing with a generator which would otherwise be required for charging the battery.

When the engine is operated at a low speed, the rotary electric machine may be operated as a motor to boost the speed of the compressor, thereby assisting in the supercharging operation of the supercharger to produce a larger engine torque and an increased engine output, even though the engine speed is low.

An embodiment of the invention will now be described, by way of example, with reference to the accompanying drawings, in which

Fig. 1 is a view, partly in block form, of an internal combustion engine with a control system according to the invention;

Fig. 2 is a cross-sectional view of a supercharger incorporated in the control system shown in Fig. 1;

Fig. 3 is a flowchart of an operation sequence of the control system; and

Fig. 4 is a graph showing the relationship between the engine speed and the engine torque.

As shown in Fig. 2, a supercharger 1 includes a compressor housing 2, a turbine housing 3, and a central housing 4. Fixed bearings 5 are disposed at opposite ends of the central housing 4, and floating bearings 6 are slidably rotatably disposed in the fixed bearings 5, respectively. A shaft 7 extends through the floating bearings 6 and has its opposite end portions rotatably supported by the floating bearings 6.

To the opposite ends of the shaft 7, there are secured a compressor impeller 8 and a turbine impeller 9, respectively, which are accommodated respectively in the compressor and turbine housing 2, 3. The turbine impeller 9 is rotated by the energy of exhaust gas delivered from an internal combustion engine 20 (Fig. 1) into a scroll 10. When the turbine impeller 9 is rotated, it rotates the shaft 7, rotating the compressor impeller 8 for pressurising air introduced from an air intake pipe 11 in a diffuser 12 and charging air under pressure into the cylinders of the internal combustion engine 20.

An axially elongate ring-shaped rotor 13 made of a material containing a rare earth element is mounted substantially centrally on the shaft 7 for generating strong magnetic forces. The opposite end faces of the magnet rotor 13 are securely held by metal discs 14 of high tensile strength. The magnet rotor 13 is also reinforced with carbon fibres would around the outer circumference thereof. Therefore, the magnet rotor 13 is very strong and durable against centrifugal forces and vibrations upon rotation at high speeds.

A stator core 15 is mounted in the central housing 4 in surrounding relation to the magnet rotor 13. A stator coil 16 is wound on the stator core 15 for generating an AC voltage in response to rotation of the magnet rotor 13. The magnet rotor 13, the stator core 15, and the stator coil 16 jointly constitute an AC machine serving as an electric motor/generator MG.

As illustrated in Fig. 1, an exhaust manifold 21 is connected to the exhaust ports of the internal combustion engine 20 and communicates with the scroll 10 of the supercharger 1. The diffuser 12 is held in communication, through the air intake pipe 11, with an intake manifold 22, to which there is attached a boost sensor 24 for detecting the boost pressure and applying a boost signal to a control unit 23. A fuel injection pump 25 is mounted on the internal combustion engine 20 for injecting fuel into the engine cylinders. A load sensor 26 is associated with the fuel injection pump 25 for directing the amount of fuel injected thereby to detect the load imposed on the internal combustion engine 20. A load signal from the load sensor 26 is fed to the control unit 23. The amount of fuel injected by the fuel injection pump 25 into the cylinders of the internal combustion engine 20 is controlled by a control signal produced by the control unit 23.

A rotation sensor 27 is also associated with the internal combustion engine 20 for detecting the speed of rotation of the crankshaft of the engine 20. A detected rotation signal is fed from the rotation sensor 27 to the control unit 23.

The control unit 23 is also supplied with a signal from an accelerator sensor 28 which detects the depth to which the accelerator pedal is depressed, a signal from a gear sensor 29 which detects the position of a select lever that selects a gear of a gear transmission, and a signal from a brake position sensor 30 which detects one, at a time, of strong and weak exhaust brake effects, the brake position sensor 30 serving as a means for detecting the condition of operation of engine braking.

The stator coil 16 of the motor/generator MG is connected to a current detecting device 31. When the motor/generator MG operates as a generator, the current detecting device 31 detects an output current from the generator. When the motor/generator MG operates as a motor, the current detecting device 31 detects a current supplied from a battery 32, and can determine the electric energy stored in the battery by calculating the current supplied from the battery and the current consumed to change the battery. Signals indicative of the electric energy stored in the battery 32 and the detected currents are applied from the current detecting device 31 to the control unit 23. A load setting unit 33 serves to establish an electric power output when the motor/generator MG is to operate as a generator, and is controlled by a command signal from the control unit 23 for setting such an electric power output. An inverter 34 converts the direct current supplied from the battery via a voltage converter 35 to an alternating current and supplies the alternating current to the motor/generator MG, the inverter 34 having a current controller 34a controlled by the control unit 23. Another electric device 36 is installed on the motor vehicle on which the engine 20 is mounted, and a changeover switch is provided for supplying current, via the load setting unit 33, to a resistor 38.

Operation of the control system shown in Figs. 1 and 2 will now be described with reference to the flowchart of Fig. 3.

While the motor vehicle is running, and if the signal from the load sensor 26 on the fuel injection pump 25 indicates that the engine load L is smaller than a prescribed load L0 in a step S1 and also if the signals from the gear sensor 29 and the accelerator sensor 28 indicate that the gear is suitable for the operation of the exhaust brake and the accelerator pedal is not depressed, then it is determined that the exhaust brake be operated. To impose a load on the energy of the exhaust gas emitted from the exhaust manifold 21, the motor/generator MG is operated as a generator. The signal from the brake position sensor 30 is checked in a step S2. If the brake position is a position I requiring a maximum exhaust brake force in a step S3, then the load setting unit 33 is controlled to maximise the generator current and the battery 32 is charged with a large current in a step S4. For increasing the effect of the exhaust brake, electric power may be supplied from the inverter 34 to the motor/generator MG so that the motor/generator MG will be rotated in the reverse direction as the motor, in a step S5, to cause the turbine impeller 9 to increase the exhaust brake effect.

If the signal from the brake position sensor 30 is indicative of a position II in the step S3, then the control system moves to a step S6 and then to a step S7 in which the generator current is controlled at a medium level to exert the exhaust brake at a medium level. If the brake position is a position III in the step S6, then the load setting unit 33 is controlled, in a step S8, so that the generator current is reduced to weaken the brake force.

If the signal from the load sensor 26 indicates that the engine load L is larger than the prescribed load L0 in the step S1, the signal from the rotation sensor 27 indicates whether the engine speed N is lower than a prescribed speed N0 in a step S9, and if the engine load L is larger than a high load L1 in a step S10, i.e., if the engine rotates at a low speed and is required to produce a large output, then the inverter 34 is operated in a step S11 to convert direct current from the battery 32 to alternating current for thereby operating the motor/generator MG as a motor. The rotation of the compressor impeller 8 is now assisted by the motor to charge air under pressure into the intake manifold 22. If the signal from the boost sensor 24 on the intake manifold 22 indicates that the boost pressure P is lower than a prescribed boost pressure P1 in a step S12, then the current supplied from the inverter 34 to the motor/generator MG is increased. If the boost pressure P is higher than the prescribed boost pressure P1, the supplied current is reduced. The output power from the internal combustion engine 20 when it rotates at a low speed is therefore increased.

As described above, when the exhaust brake is required, the motor/generator MG is operated as a generator to charge the battery 32. When the internal combustion engine 20 is required to increase its output power in a low speed range, the motor/generator MG is operated as a motor and the current is supplied from the battery 32. The current detecting device 31 detects these charging and supplied currents and integrates them. The integrated electric power W1 stored in the battery 32 and the integrated electric power W supplied to energise the motor are compared. If the power W is larger than the power W1 in a step S13, then it is determined that the battery 32 is excessively discharged, and hence the current supply to the inverter 34 is cut off. Thereafter, the rate of flow of fuel injected by the fuel injection pump 25 is reduced in a step S14 to prevent an increase in exhaust gas smoke which would otherwise be produced by excessive fuel supply.

If the integrated power W1 is greater than the integrated power W in the step S13, then control jumps to a step S16 which ascertains whether the integrated power W1 is larger than the storage capacity W0 of the battery 32. If the power W1 is larger than the storage capacity W0, then it is determined that the battery 32 is being excessively charged and is likely to be damaged. Therefore, the changeover switch 37 is switched to connect the resistor 38, so that the load current from the load setting unit 33 is delivered to that resistor..

If the engine speed N is higher than the prescribed speed N0 in the step S9, and/or if the engine load L is lower than the large load L1, then control goes to a step S15 in which the engine speed and load are measured, and the load setting unit 33 is controlled to produce a generator output commensurate with the measured engine speed and load for charging the battery 32. Since the current which charges the battery 32 and a current supplied to the other electric device 36 pass through the current detecting device 31, they are also integrated thereby in the integrating process as described above.

With the arrangement of the present invention, as described above, the motor/generator is mounted on the turbine shaft of the supercharger and is controlled by signals indicative of the engine load, the engine speed, and the magnitude of the brake. This enables the exhaust brake to be effectively operated for increased engine braking without the need for a valve for the exhaust brake. By reversing the turbine impeller, the engine braking can be increased by the exhaust brake force.

No conventional battery charging generator is required since the exhaust energy is converted to electric energy by the motor/generator for charging the battery.

When the engine rotates at a low speed and produces a low output, the motor/generator is operated as a motor to assist the supercharger in charging air into the engine cylinders. Therefore, the engine can produce a large torque even when it operates in the low-speed range. As indicated by the torque curve Tc in Fig. 4, the engine torque during low-speed operation of the engine is increased for a greater engine output.

## Claims

1. A control system, for controlling an internal combustion engine (20) having a supercharger (1) comprising an exhaust turbine (9) connected to an exhaust manifold (21) of the engine, a compressor (8), a rotatable shaft (7) on which the exhaust turbine (9) and the compressor (8) are co-axially mounted, a rotary electric machine (MG) mounted on the rotatable shaft and operable selectively as an electric generator or an electric motor, and consuming means (32) for consuming electric power generated by the rotary electric machine (MG) as a load on the electric generator, characterised by means (26-30,23) for detecting an engine brake mode, setting means (23) for setting an engine brake mode of the internal combustion engine, the rotary electric machine (MG) being operated in use as an electric generator when the engine brake mode is set by the setting means.

2. A control system according to claim 1, comprising an inverter (34) for driving the rotary electric machine (MG) as an electric motor, the setting means (23) setting the magnitude of a force of an engine brake to be imposed on the internal combustion engine, and further comprising inverter driving means for driving the inverter (34) to operate the rotary electric machine (MG) as the electric motor when the force of the engine brake is set to a value larger than a prescribed value by the setting means (23), for reversing rotation of the exhaust turbine of the supercharger, the operating means operating the rotary electric machine (MG) as the electric generator when the force of the engine brake is set to a value smaller than the prescribed value.

3. A control system according to claim 1 or claim 2, wherein the consuming means comprises a battery (32) for storing electric power generated by the electric generator.

4. A control system according to any of claims 1 to 3, wherein the means for detecting an engine brake mode comprises the setting means (23), a load sensor (26) for detecting the load on the engine, an accelerator sensor (28) for detecting the depth to which the accelerator pedal is depressed, and a gear sensor (29) for detecting the position of a gear select lever.

## Revendications

1. Système de commande pour commander un moteur à combustion interne (20) comportant un suralimentateur (1) comprenant une turbine d'échappement (9) connectée au collecteur d'échappement (21) du moteur, un compresseur (8), un arbre tournant (7) sur lequel la turbine d'échappement (9) et le compresseur (8) sont montés de manière co-axiale, une machine électrique rotative (MG) montée sur l'arbre tournant et utilisable sélectivement comme dynamo ou moteur électrique et des moyens de consommation (32) pour consommer le courant électrique produit par la machine électrique rotative (MG) comme charge sur la dynamo, caractérisé par des moyens (26-30,23) pour détecter un mode de freinage sur le moteur, des moyens de réglage (23) pour régler un mode de freinage sur le moteur du moteur à combustion interne, la machine électrique rotative (MG) étant utilisée comme dynamo quand le mode de freinage sur le moteur est réglé par le moyen de réglage.

2. Système de commande selon la revendication 1, comprenant un inverseur (34) pour entraîner la machine électrique rotative (MG) comme moteur électrique, le moyen de réglage (23) réglant l'amplitude de la force de frein moteur à imposer au moteur à combustion interne, et comprenant en outre des moyens de commande d'inverseur pour commander l'inverseur (34) pour faire fonctionner la machine électrique rotative (MG) comme moteur électrique quand la force du frein moteur est réglée à une valeur supérieure à une valeur prescrite par le moyen de réglage (23), pour inverser la rotation de la turbine d'échappement du suralimentateur, la commande actionnant la machine électrique rotative (MG) comme dynamo quand la force du frein moteur est réglée à une valeur inférieure à la valeur prescrite.

**3.** Système de commande selon la revendication 1 ou 2, dans lequel le moyen de consommation comprend une batterie (32) pour stocker le courant électrique produit par la dynamo.

**4.** Système de commande selon l'une quelconque des revendications 1 à 3, dans lequel le moyen de détection d'un mode de freinage sur le moteur comprend le moyen de réglage (23), un capteur de charge (26) pour détecter la charge sur le moteur, un capteur d'accélérateur (28) pour détecter la profondeur à laquelle la pédale de l'accélérateur est enfoncée et un capteur de vitesses (29) pour détecter la position d'un levier de changement de vitesses.

## Ansprüche

**1.** Ein Regelsystem zur Regelung eines Motors (20) mit geschlossenem Brennraum, der mit einem Kompressor (1) einschließlich einer an den Auspuffkrümmer (21) des Motors angeschlossenen Abgasturbine (9), eines Verdichters (8), einer rotierenden Welle (7), auf der die Abgasturbine (9) und der Verdichter (8) koaxial angeordnet sind, einer rotierenden elektischen Maschine (MG), die an der rotierenden Welle angebracht ist und selektiv als elektrischer Generator oder als elektrischer Motor arbeitet, und mit Verbrauchermitteln (32) versehen ist zum Verbrauchen von elektrischer, durch die rotierende elektrische Maschine (MG) erzeugter Energie als Last des elektrischen Generators, gekennzeichnet durch Mittel (26 bis 30, 23) zum Feststellen eines Motor-Bremszustandes und durch Stellmittel (23) zum Einstellen eines Motor-Bremszustandes des Motors mit geschlossenem Brennraum, wobei die rotierende elektrische Maschine (MG) während des Betriebes als ein elektrischer Generator betrieben wird, wenn der Motor-Bremszustand durch die Stellmittel eingestellt ist.

**2.** Ein Regelsystem nach Anspruch 1, das einen Inverter (34) zum Antreiben der rotierenden elektrischen Maschine (MG) als einen Elektromotor umfaßt, wobei die Stellmittel (23) die Größe einer Kraft einer Motorbremse einstellen, die auf den Motor mit geschlossenem Brennraum wirkt, und das außerdem Inverter-Treibermittel zum Treiben des Inverters (34) umfaßt, um die rotierende elektrische Maschine (MG) als den Elektromotor zu betreiben, wenn die Kraft der Motorbremse durch die Stellmittel (23) auf einen Wert gestellt ist, der größer als ein vorgeschriebener Wert ist, zum Umkehren der Rotation der Abgasturbine des Kompressors, wobei die Betriebsmittel die rotierende elektrische Maschine (MG) als den elektrischen Generator betreiben, wenn die Kraft der Motorbremse auf einen Wert eingestellt ist, der kleiner als der vorgeschriebene Wert ist.

**3.** Ein Regelsystem nach Anspruch 1 oder 2, bei dem die Verbrauchsmittel eine Batterie (32) zum Speichern elektrischer Energie umfassen, die durch den elektrischen Generator erzeugt wird.

**4.** Ein Regelsystem nach einem der Ansprüche 1 bis 3, bei dem die Mittel zur Feststellung eines Motor-Bremszustandes die Stellmittel (23), einen Lastsensor (26) zum Feststellen der Motorlast, einen Gaspedalsensor (28) zur Feststellung der Stellung, in der sich das Gaspedal befindet, und einen Gangsensor (29) zur Feststellung der Position des Ganghebels umfassen.

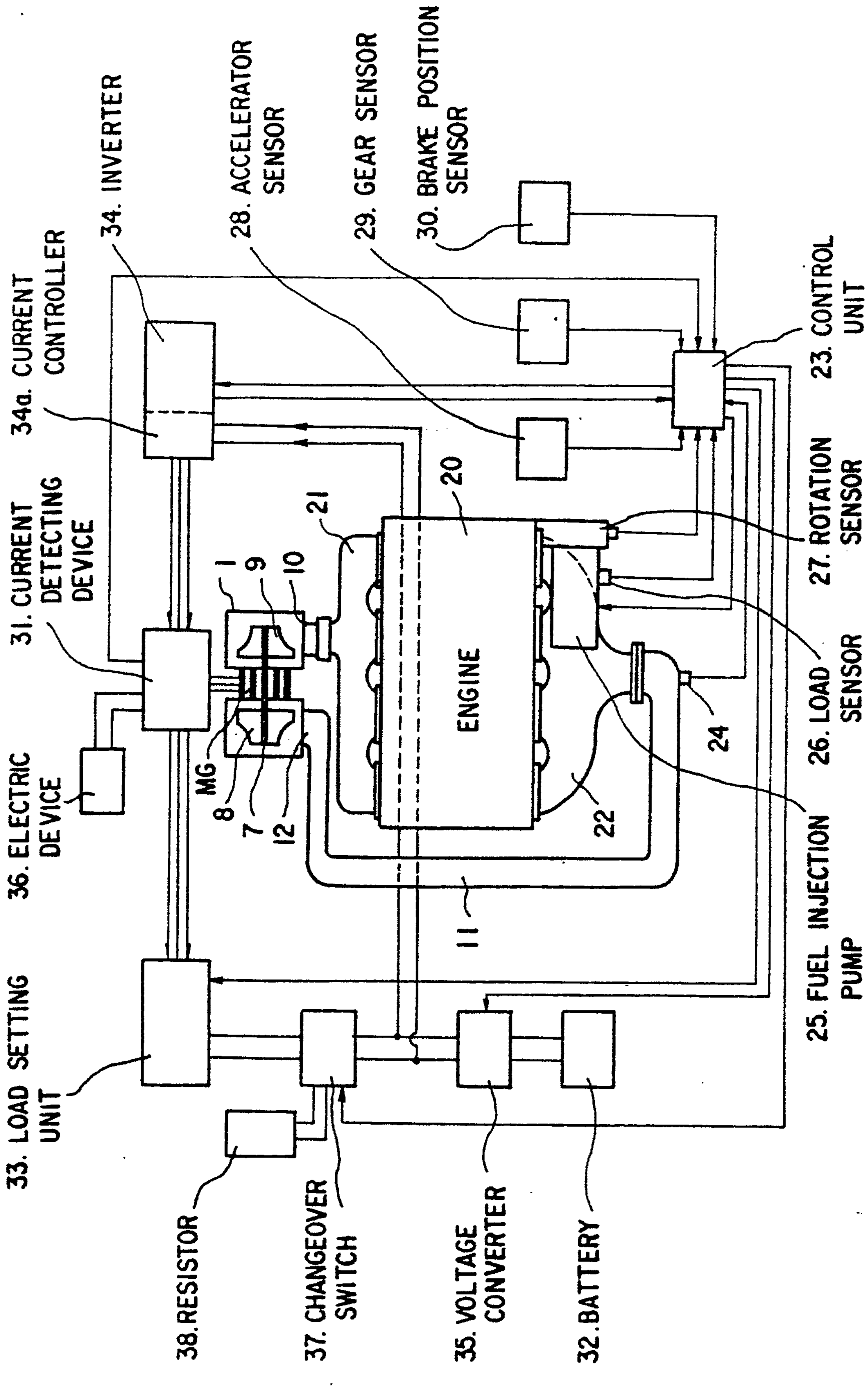
34a. CURRENT CONTROLLER
34. INVERTER
28. ACCELERATOR SENSOR
29. GEAR SENSOR
30. BRAKE POSITION SENSOR
23. CONTROL UNIT
27. ROTATION SENSOR
26. LOAD SENSOR
25. FUEL INJECTION PUMP
24
20
21
ENGINE
22
11
1
9
10
MG
8
7
12
31. CURRENT DETECTING DEVICE
36. ELECTRIC DEVICE
33. LOAD SETTING UNIT
38. RESISTOR
37. CHANGEOVER SWITCH
35. VOLTAGE CONVERTER
32. BATTERY

Fig. 1

Fig. 2

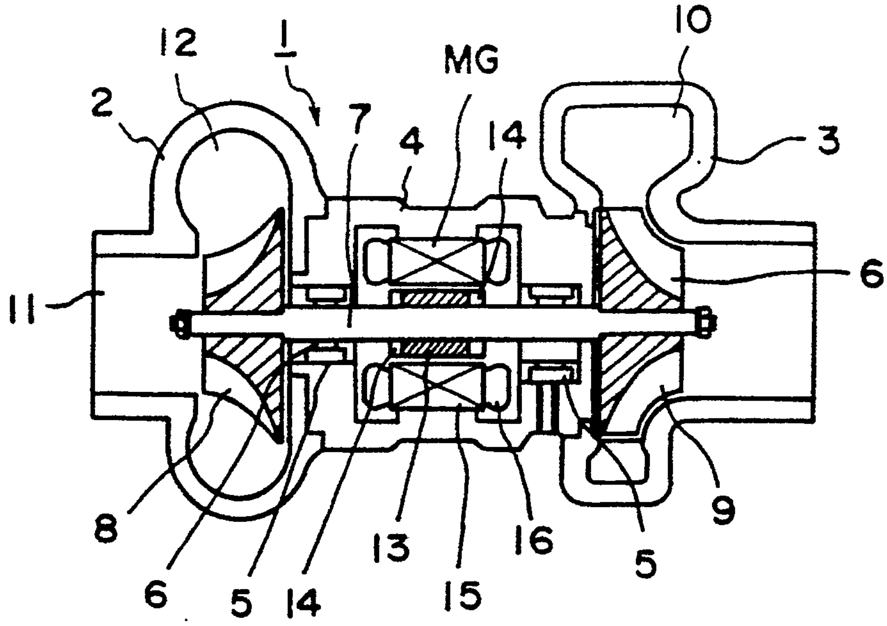
12
1
MG
10
2
7
4
14
3
6
11
8
6
5
14
13
15
16
5
9

Fig. 4

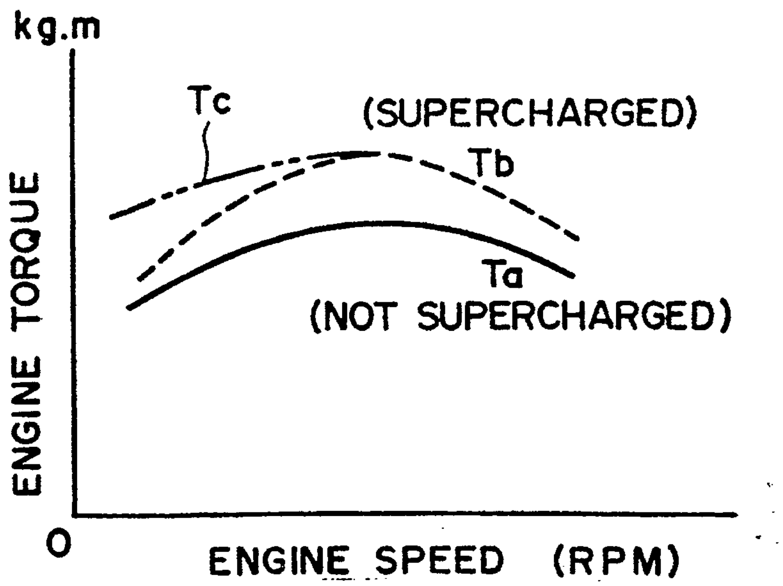
kg.m
Tc
(SUPERCHARGED)
Tb
Ta
(NOT SUPERCHARGED)
ENGINE TORQUE
0
ENGINE SPEED (RPM)

Fig. 3

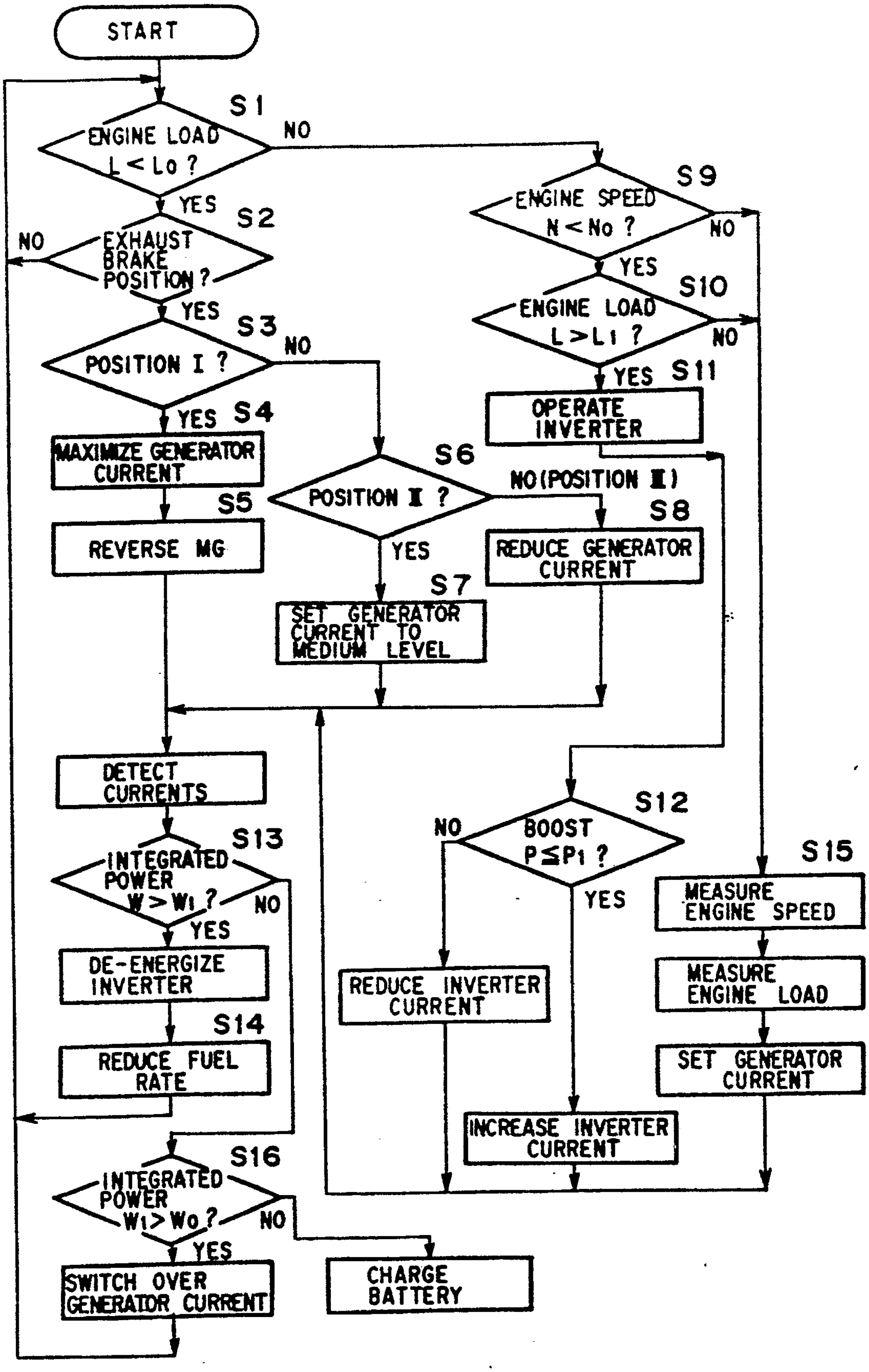
START
S1
ENGINE LOAD L < Lo ?
NO
YES
S2
EXHAUST BRAKE POSITION ?
NO
YES
S3
POSITION I ?
NO
YES
S4
MAXIMIZE GENERATOR CURRENT
S5
REVERSE MG
S6
POSITION II ?
NO (POSITION III)
YES
S7
SET GENERATOR CURRENT TO MEDIUM LEVEL
S8
REDUCE GENERATOR CURRENT
S9
ENGINE SPEED N < No ?
NO
YES
S10
ENGINE LOAD L > L1 ?
NO
YES
S11
OPERATE INVERTER
DETECT CURRENTS
S13
INTEGRATED POWER W > W1 ?
NO
YES
DE-ENERGIZE INVERTER
S14
REDUCE FUEL RATE
S12
BOOST P ≤ P1 ?
NO
YES
REDUCE INVERTER CURRENT
INCREASE INVERTER CURRENT
S15
MEASURE ENGINE SPEED
MEASURE ENGINE LOAD
SET GENERATOR CURRENT
S16
INTEGRATED POWER W1 > Wo ?
NO
YES
SWITCH OVER GENERATOR CURRENT
CHARGE BATTERY